# EUROPEAN PATENT APPLICATION

(11) **EP 1 566 720 A2**
(43) Date of publication of application: **24.08.2005**
(21) Application number: 05251029.4
(22) Date of filing: 23.02.2005
(51) Int. Cl.: G06F 1/00

(54) **Information processor, information processing method, program and storage medium**

(30) Priority: 23.02.2004 JP 2004046242
(71) Applicant: NEC CORPORATION, Tokyo 108 (JP)
(72) Inventor: Chishima, Hiroshi, c/o NEC Corporation, Tokyo 108 (JP); Tani, Mikiya, c/o NEC Corporation, Tokyo 108 (JP)
(74) Representative: Moir, Michael Christopher

(57) **Abstract**

An information processor, an information-processing method, a program and storage medium for assuring the prevention of illegal copying even when an application program without a copy-controlling function exists in a system. An information processor includes: a controller for controlling at least one application to which a designated security attribute is assigned; information storage for storing at least one piece of attribute information indicating a designated attribute, and at least one piece of conversion information for converting the designated security attribute; a contents storage for storing a plurality of contents; and, a copy-prohibited-contents discrimination unit for determining whether contents requested for reading by an application are copy-prohibited contents. The controller converts the designated security attribute based on the conversion information, and controls the operation of an application based on the converted attribute information in a case where the copy-prohibited-contents discrimination unit has determined that the contents in the contents storage requested for reading by the application is copy-prohibited contents.

## Description

### BACKGROUND OF THE INVENTION

### Field of the Invention

The present invention relates to an information processor, an information processing method, a program and a storage medium for preventing illegal copying of copy-prohibited contents.

### Description of the Prior Art

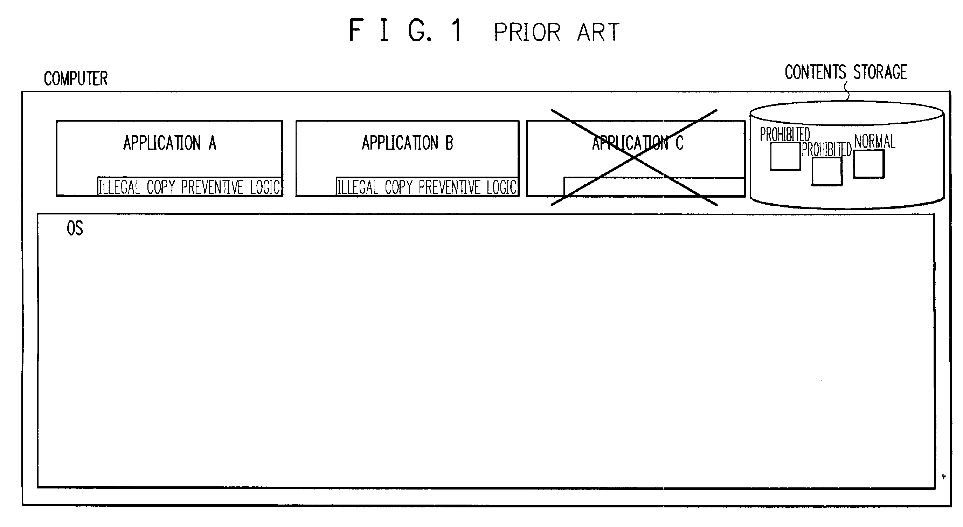

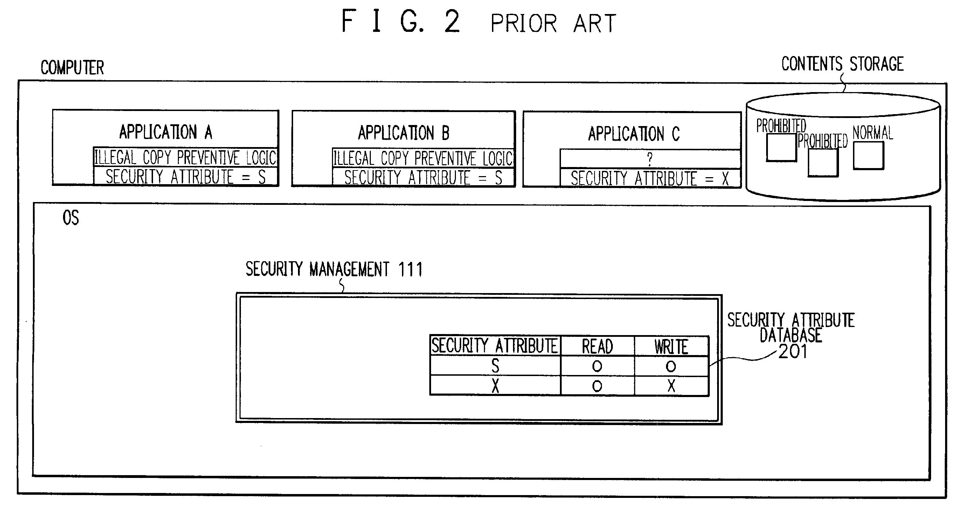

Generally, for copying contents such as image data or MP3 (MPEG-1 Audio Layer 3) data, a device such as a computer reads and writes the contents. Figs. 1 and 2 are schematic diagrams showing the structures of conventional illegal copy preventive systems. As shown in Fig. 1, a conventional illegal copy preventive computer system is realized by including illegal copy preventive logic in all application programs (applications A and B) handling contents. Such computer has limitations in that an application program (application C) not guaranteed to have the illegal copy preventive logic is not supposed to exist, or as shown in Fig. 2, the application C is not given the writing authority in the first place.

As an example of the prior art, the Japanese Patent Application laid open No. 2001-184081 discloses an information processor which extracts a recording limit information for limiting recording from contents and, based on the extracted limit information, converts the digital data composing contents to recording-ineffective digital data. The Japanese Patent Application laid open No. 2002-7214 discloses an information processor which is capable of preventing software from rewriting a nonvolatile storage device illegally by rewriting the write protect bit in a control resister when an interrupt handler determines that the access by a ROM rewriting program is not authorized. Further, the Japanese Patent Application laid open No. 2003-44297 discloses an information processor which captures an operation request from the process or the OS and the operation request is denied when the process or the OS does not have the access right to designated computer resources.

However, in a computer handling contents prohibited from being illegally copied or redistributed such as fare-paying contents (hereinafter referred to as copy prohibited contents), because it is necessary for all application programs in the computer to correctly include such logic as not copying copy prohibited contents (hereinafter referred to as illegal copy preventive logic), application programs not guaranteed to include correctly the illegal copy preventive logic has the limitation that they can not be installed into the computer to prevent illegal copying. Even if the installation is allowed, such application program must be subject to strict limitations as, for example, to be prohibited from all writing operations. That causes unavailability for users because the freedom of the application program is limited.

Further, in the case that a user installs an application program from an external server or the like by a mobile communication terminal such as a cell phone, it is necessary to control the writing right of an installed application program from the point of view of the copyright protection.

### SUMMARY OF THE INVENTION

It is therefore an object of the preferred embodiments of the present invention to provide an information processor, information processing method, a program and storage medium for preventing illegal copying of copy-prohibited contents while maintaining the freedom of functions of an application program even if the application program which has no copy control mechanism exists in a system, by realizing copy control for contents by employing mechanisms at the basic software (OS) level.

According to a first aspect of the present invention, there is provided an information processor comprising a controller for controlling applications, a contents storage for storing a plurality of contents, a reading discrimination unit for determining whether or not an application has read copy prohibited contents in the contents storage, and a reading history memory for memorizing that the application has read the copy prohibited contents, wherein the controller prohibits the writing operation of the application having the history of copy prohibited contents read.

According to the second aspect of the present invention, there is provided an information processor comprising a controller for controlling at least one application, a contents storage for storing a plurality of contents, and a writing prohibition data addition unit for adding writing prohibition data indicating the prohibition of writing operation to an application when the application is going to read copy prohibited contents from the contents storage, wherein the controller prohibits the writing operation of the application to which the writing prohibition data is added.

According to the third aspect of the present invention, there is provided an information processor comprising a controller for controlling at least one application to which a designated security attribute is assigned, an information storage for storing at least one piece of attribute information about a designated attribute and at least one piece of conversion information for converting a designated security attribute, a contents storage for storing a plurality of contents, and a copy prohibited contents discrimination unit for determining whether or not contents requested by an application for reading are copy prohibited, wherein the controller converts the designated security attribute based on the conversion information and controls the operation of the application based on the converted attribute information in the case that the copy prohibited contents discrimination unit has determined that the contents in the contents storage requested by the application for reading are copy prohibited contents.

According to the fourth aspect of the present invention, in the third aspect, the information processor further comprises a connector for connecting to an external device via a network, and the controller converts the designated security attribute based on the conversion information and controls the operation of an application based on the converted attribute information in the case that the copy prohibited contents discrimination unit has determined that the contents in the external device requested by the application for reading via the connector are copy prohibited contents.

According to the fifth aspect of the present invention, there is provided an information processor comprising a controller for controlling at least one application to which a designated security attribute is assigned, an information storage for storing at least one piece of attribute information about a designated attribute and at least one piece of conversion information for converting a designated security attribute, and a connector for connecting to an external device via a network, and the controller converts the designated security attribute based on the conversion information and controls the operation of an application based on the converted attribute information in the case that the copy prohibited contents discrimination unit has determined that the contents in the external device requested by the application for reading via the connector are copy prohibited contents.

According to the sixth aspect of the present invention, in one of the third to fifth aspects, the controller converts a security attribute of a correspondent application based on the conversion information in the case that a writing operation is performed in communication between applications having different security attributes.

According to the seventh aspect of the present invention, in one of the third to sixth aspects, the information processor further comprises a memory area for storing a plurality of contents and a copy prohibited memory area discrimination unit for determining whether or not contents in the memory area requested by an application for reading are in a copy prohibited memory area of the memory area, and the controller converts the designated security attribute based on the conversion information and controls the operation of the application based on the converted attribute information in the case that the copy prohibited memory area discrimination unit has determined that the contents in the memory area requested by the application for reading are stored in the copy prohibited memory area.

According to the eighth aspect of the present invention, in one of the third to seventh aspects, the reading request by the application is for a storage medium, a common memory, a network communication, and communication between applications.

According to the ninth aspect of the present invention, in one of the third to eighth aspects, the reading request by the application is the transmission of signals to another application.

According to the tenth aspect of the present invention, there is provided an information processing method comprising the steps of determining whether or not an application has read copy prohibited contents, memorizing that the application has read the copy prohibited contents, and prohibiting the writing operation of the application having the history of copy prohibited contents read.

According to the eleventh aspect of the present invention, there is provided an information processing method comprising the steps of adding writing prohibition data indicating the prohibition of writing operation to an application and prohibiting the writing operation of the application to which the writing prohibition data is added.

According to the twelfth aspect of the present invention, there is provided an information processing method comprising the steps of, when an application requests for reading of contents, determining whether or not the contents to be read are copy prohibited contents, when the contents requested for reading has been determined to be copy prohibited contents, converting a security attribute based on conversion information and controlling the operation of the application based on the converted security attribute.

According to the thirteenth aspect of the present invention, in the twelfth aspect, the information processing method further comprises the steps of, when an application requests for reading of contents in an external device connected via a network and the contents to be read has been determined to be copy prohibited contents, converting the security attribute based on the conversion information and controlling the operation of the application based on the converted security attribute.

According to the fourteenth aspect of the present invention, in the twelfth or thirteenth aspect, a security attribute of a correspondent application is converted based on the conversion information in the case that a writing operation is performed in communication between applications having different security attributes.

According to the fifteenth aspect of the present invention, in one of the twelfth to fourteenth aspects, the information processing method further comprises the steps of, when an application requests for reading of contents in a memory area storing a plurality of contents and the contents to be read has been determined to be stored in a copy prohibited memory area in the memory area, converting the security attribute based on the conversion information and controlling the operation of the application based on the converted security attribute.

According to the sixteenth aspect of the present invention in one of the twelfth to fifteenth aspects, the reading request by the application is for a storage medium, a common memory, a network communication, and communication between applications.

According to the seventeenth aspect of the present invention, in one of the twelfth to sixteenth aspects, the reading request by the application is the transmission of signals to another application.

According to the eighteenth aspect of the present invention, there is provided a program for making a computer to perform the processes of determining whether or not an application has read copy prohibited contents, memorizing that the application has read copy prohibited contents, and prohibiting the writing operation of the application having the history of copy prohibited contents read.

According to the nineteenth aspect of the present invention, there is provided a program for making a computer to perform the processes of adding writing prohibition data indicating the prohibition of writing operation to an application when the application is going to read copy prohibited contents and prohibiting the writing operation of the application to which the writing prohibition data is added.

According to the twentieth aspect of the present invention, there is provided a program for making a computer to perform the processes of, when an application requests for reading of contents, determining whether or not the contents to be read are copy prohibited contents, when the contents requested for reading has been determined to be copy prohibited contents, converting a security attribute based on conversion information and controlling the operation of the application based on the converted security attribute.

According to the twenty-first aspect of the present invention, in the twentieth aspect, the program makes a computer to perform the processes of, when an application requests for reading of contents in an external device connected via a network and the contents to be read has determined to be copy prohibited contents, converting the security attribute based on the conversion information and controlling the operation of the application based on the converted security attribute.

According to the twenty-second aspect of the present invention, in the twentieth or the twenty-first aspect, the program makes a computer to perform the process of converting a security attribute of a correspondent application based on the conversion information in the case that a writing operation is performed in communication between applications having different security attributes.

According to the twenty-third aspect of the present invention, in one of the twentieth to twenty-second aspects, the program makes a computer to perform the processes of, when an application requests for reading of contents in a memory area storing a plurality of contents and the contents to be read has been determined to be stored in a copy prohibited memory area in the memory area, converting the security attribute based on the conversion information and controlling the operation of the application based on the converted security attribute.

According to the twenty-fourth aspect of the present invention, in one of the twentieth to twenty-third aspects, the reading request by the application is for a storage medium, a common memory, a network communication, and communication between applications.

According to the twenty-fifth aspect of the present invention, in one of the twentieth to twenty-fourth aspects, the reading request by the application is the transmission of signals to another application.

According to the twenty-sixth aspect of the present invention, there is provided a storage medium storing the program stored above.

### BRIEF DESCRIPTION OF THE DRAWINGS

Preferred features of the present invention will now be described, by way of example only, with reference to the accompanying drawings, in which:-
Fig. 1 is a conceptual diagram showing an example of the structure of a conventional illegal copy preventive system;
Fig. 2 is a conceptual diagram showing another example of the structure of a conventional illegal copy preventive system;
Fig. 3 is a block diagram showing the structure of another information processor according to the first embodiment of the present invention;
Fig. 4 is a functional block diagram showing the structure of an information processor according to the first embodiment of the present invention;
Fig. 5 is a conceptual diagram showing an example of the structure according to the first embodiment of the present invention;
Fig. 6 is a conceptual diagram showing another example of the structure according to the first embodiment of the present invention;
Fig. 7(a) is a flowchart showing the operation of the first embodiment of the present invention;
Fig. 7(b) is a flowchart showing the operation of the first embodiment of the present invention;
Fig. 8 is a block diagram showing the structure of an information processor according to the second embodiment of the present invention;
Fig. 9 is a functional block diagram showing the structure of an information processor according to the second embodiment of the present invention;
Fig. 10 is a conceptual diagram showing an example of the structure according to the second embodiment of the present invention;
Fig. 11 is a block diagram showing the structure of an information processor according to the third embodiment of the present invention;
Fig. 12 is a conceptual diagram showing an example of the structure according to the third embodiment of the present invention;
Fig. 13 is a conceptual diagram showing another example of the structure according to the third embodiment of the present invention;
Fig. 14 is a conceptual diagram showing yet another example of the structure according to the third embodiment of the present invention;
Fig. 15 is a functional block diagram showing the structure of an information processor according to the fourth embodiment of the present invention;
Fig. 16 is a conceptual diagram showing an example of the structure according to the fourth embodiment of the present invention;
Fig. 17 is a flowchart showing the operation of the fourth embodiment of the present invention;
Fig. 18 is a functional block diagram showing the structure of an information processor according to the fifth embodiment of the present invention;
Fig. 19 is a conceptual diagram showing an example of the structure according to the fifth embodiment of the present invention;
Fig. 20 is a flowchart showing the operation of the fifth embodiment of the present invention;
Fig. 21 is a block diagram showing the structure of a mobile terminal according to the sixth embodiment of the present invention; and
Fig. 22 is a functional block diagram showing the structure of a mobile terminal according to the sixth embodiment of the present invention.

### DETAILED DESCRIPTION OF THE PREFERRED EMBODIMENTS

The preferred embodiments of the present invention will be described in detail with reference to the accompanying drawings.

A general outline of the present invention will be given first. The present invention employs such OS (Operating System) as a SELinux (http://www.nsa.gov/selinax/) which can control functions being used by an application process based on its security attribute as basic software on a computer, and further, as a function of the OS, a discrimination function for determining whether or not contents which the application process is going to handle are copy prohibited is added. When this OS detects that an application process not guaranteed to have the illegal copy preventive logic tries to read copy prohibited contents, this OS converts the security attribute of the application process to the security attribute which prevents writing function. As explained above, by converting not a database managed by the OS but a security attribute of the application process deployed on a memory, the application process cannot write copy prohibited contents. As a result, it is possible to prevent illegal copy. Such application process as described above can perform the writing operation without any limitation until it tries to read the copy prohibited contents. Incidentally, "communication between processes" in the following embodiments means communication between application programs only.

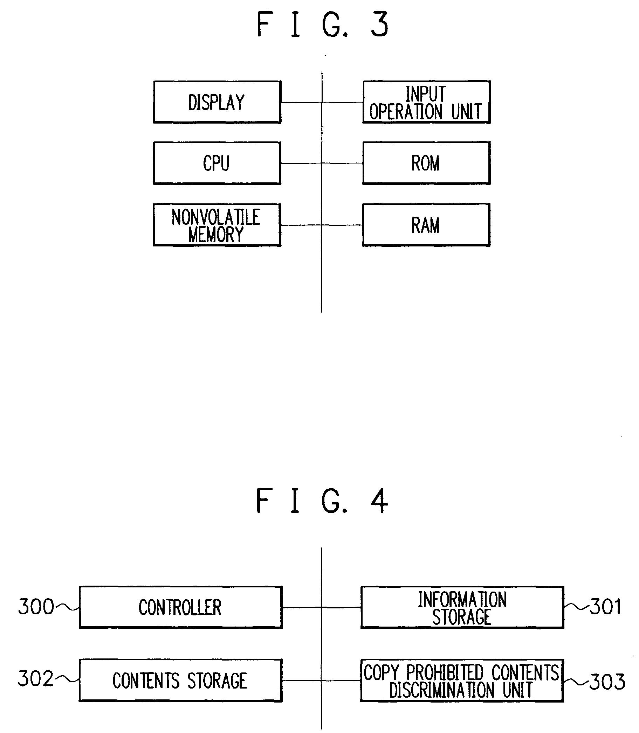

A description will be given of an information processing terminal device according to the first embodiment of the present invention. Fig. 3 shows the hardware structure of an information processing terminal of the present invention. Examples of the information processing terminal include a commonly used computer, a game console, and a multifunction copying machine. In such information processing terminal device, when a CPU shown in Fig. 3 reads an application process, an operating system is made to perform control processing of the first embodiment described hereinafter.

The processing is not restricted to program processing performed only by the operation system being software as described above, but also may be performed by respective units being hardware provided to the information processing terminal as shown in Fig. 4. In Fig. 4, a controller 300 performs security management processing as described below by controlling each unit. An information storage 301 includes a security attribute database and a conversion rule database described below. A contents storage 302 is a nonvolatile storage storing various contents. A copy prohibited contents discrimination unit 303 performs copy prohibited contents discrimination processing as described below. Incidentally, in this embodiment, while it is assumed that the controller 300 and the contents storage 302 are a CPU (Central Processing Unit), they may be independent units.

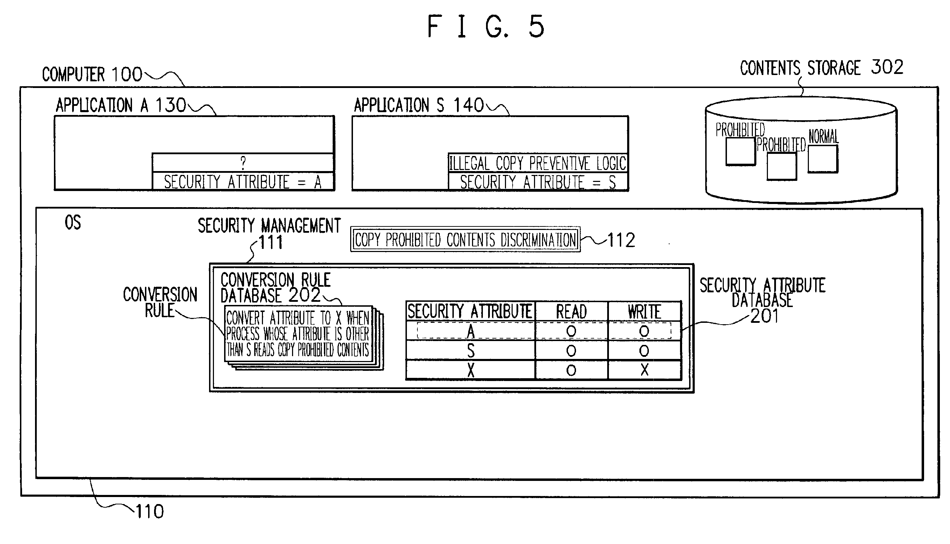

A description will be given of the structure of an information processor according to the first embodiment of the present invention with reference to Fig. 5, a conceptual diagram of this embodiment.

Referring to Fig. 5, a computer 100, an information processor of the first embodiment of the present invention comprises an operating system (OS) 110, the contents storage 302, an application process (application program) 130 not guaranteed to have an illegal copy preventive logic, and an application process (application program) 140 guaranteed to have the illegal copy preventive logic. Here, the application process 130 not guaranteed to have an illegal copy preventive logic means, for example, an application process which is not factory-installed in a computer, but is installed by a user from an external device via a network, etc. and not familiar to the computer (unrecognizable as to whether to have an illegal copy preventive logic). On the other hand, the application process 140 guaranteed to have an illegal copy preventive logic means, for example, an application process which is factory-installed in a computer and familiar to the computer (recognizable as to whether to have an illegal copy preventive logic).

The operating system 110 is an OS, which can limit functions available for the application process depending on a security attribute of the process, and performs security management processing 111 and copy prohibited contents discrimination processing 112.

When an arbitrary application process tries to read contents in the contents storage 302, the OS 110 determines by the copy prohibited contents discrimination processing 112 whether or not the contents to be read are copy prohibited contents.

By referring to a security attribute database 201 storing information on what application processes are capable or incapable of performing among the functions given by the OS in respective security attributes, the OS 110 monitors in the security management processing 111 the operation and prevents the prohibited operations when the application process is actually executed. In addition, by referring to a conversion rule database 202 storing information on a plurality of conversion rules which are the conditions for converting the security attribute of the application process, the OS 110 performs in the security management processing 111 processing based on the conversion rules. In this embodiment, the security attribute of the application A130 is converted to a copy prohibited attribute based on the conversion rules.

In the contents storage 302, copy prohibited contents and normal contents are stored. In the first embodiment, "A" is allocated as a security attribute to the application process 130 not guaranteed to have an illegal copy preventive logic. Besides, "S" is allocated as a security attribute to the application process 140 guaranteed to have the illegal copy preventive logic. As shown in the security attribute database 201 in Fig. 5, the security attributes "A" and "S" are attributes allowing reading operation and writing operation.

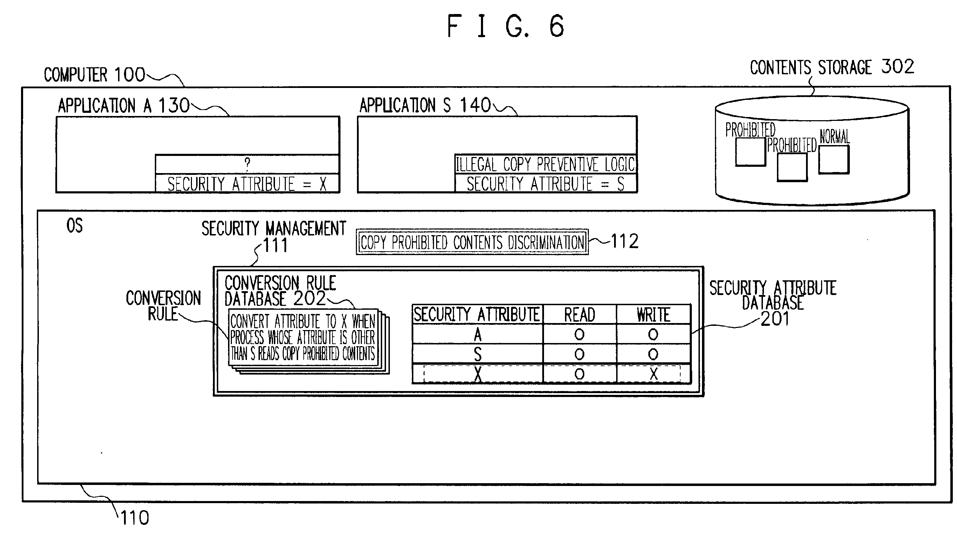

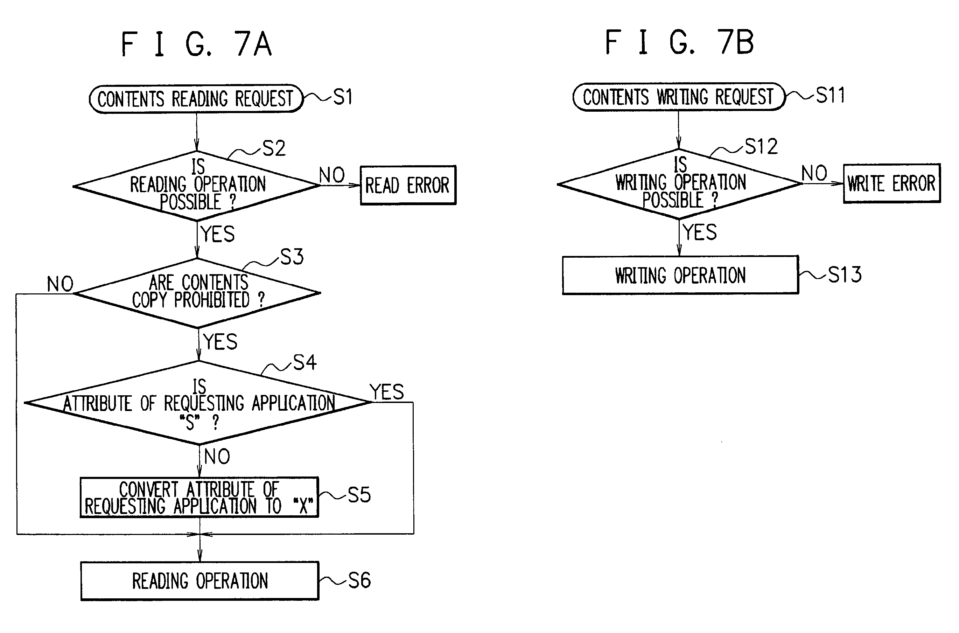

Next, a further detailed description will be given of the operation according to the first embodiment referring to conceptual diagrams Figs. 5 and 6, and flowcharts Figs. 7 (a) and 7 (b).

First, referring to Fig. 7 (a), a description will be given of an operation flow at the time of contents reading request. As shown in Fig. 5, the application process 130 not guaranteed to have an illegal copy preventive logic issues a contents reading request to the OS 110 (step S1 in Fig. 7(a)). The OS 110 performs the security management processing 111 when the application process 130 issues the contents reading request. In the security management processing 111, the OS 110 refers to the security attribute database 201 and checks whether or not the security attribute (in this case "A") of the application process which has issued the contents reading request allows reading operation (step S2 in Fig. 7(a)).

Next, the OS 110 refers to in the security management processing 111 the conversion rule about the security attribute of the application process and checks whether or not the attribute meets the conversion rule. As shown in Figs. 5 and 6, the conversion rule of this embodiment has the condition that " at the instant an application process having an attribute other than S tries to read copy prohibited contents stored in the contents storage 302, the security attribute of the application process which tries to read is converted to X".

Further, the operation system 110 performs the copy prohibited contents discrimination processing 112 to check whether or not the contents to be read are copy prohibited contents (step S3 in Fig. 7(a)). In the case that the contents to be read is the copy prohibited contents and also the security attribute of the application process having issued the reading request is not "S", as shown in Fig. 6, the security attribute of the application A130 is converted to "X" (steps S4 and S5 in Fig. 7(a)). After that, the operating system 110 reads the requested contents (step S6 in Fig. 7(a)).

Next, a description will be given of the operation flow at the time of contents writing request. As described above, the security attribute of the application A130, which has issued the reading request, is converted to "X". Thereafter, when the application process A130 requests for writing of contents already read (step S11 in Fig. 7(b)), the OS 110 refers to in the security management processing 111 the security attribute database 201 and checks whether or not the security attribute (already converted to "X") of the application A130 having issued the writing request permits writing operation (step S12 in Fig. 7(b)). As a result of the check as shown in the security attribute database 201 in Fig. 6, because the application process having the security attribute "X" is not capable of writing operation, a writing error occurs. Here, the writing operation is not only for the contents stored in the contents storage 302 but also for the contents handled in all storage mediums, common memories, network communication, and communication between application processes. Further, the transmission of signals to another process is qualified as a kind of writing operation.

As described above, according to the first embodiment of the present invention, because the operating system prevents the illegal copy by converting the security attribute of the application process, even if an application process not guaranteed to have an illegal copy preventive logic exists on a computer system, it is possible to ensure the prevention of illegal copy. As a result, the application whose security attribute has converted is, for example, capable of displaying image data contents on a terminal but incapable of duplicating the contents.

Moreover, according to the first embodiment, because the writing operation is not possible when an application process not guaranteed to have an illegal copy preventive logic tries to read copy prohibited contents, the functions of the application process are not limited unless the application process tries to read the copy prohibited contents, and therefore it is possible to maintain the freedom of the application process.

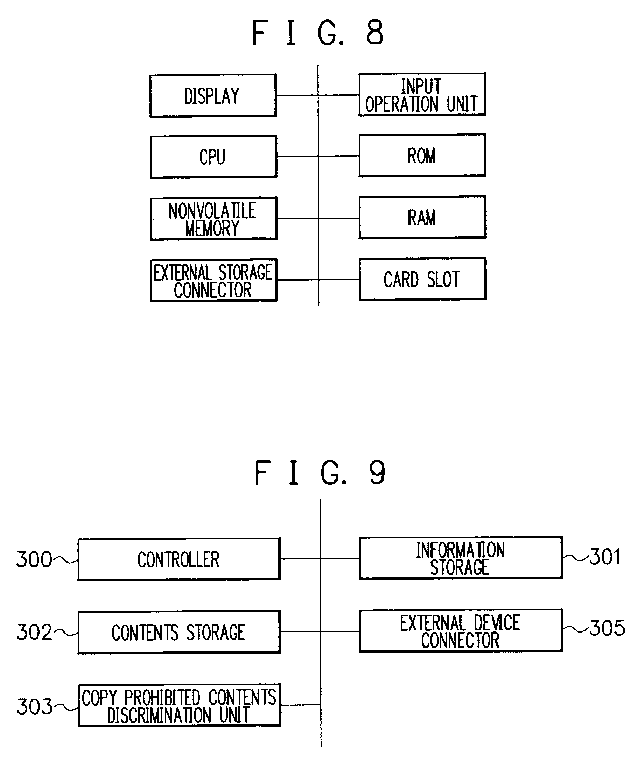

A description will be given of an information processing terminal device according to the second embodiment of the present invention. Fig. 8 is a block diagram showing the hardware structure of an information processor of the present invention. As is the case with the first embodiment, examples of the information processor include, but are not limited to, a commonly used computer, a game console, a multifunction copying machine or the like. Further, the information processing terminal device of this embodiment may be any terminal device capable of installing contents from an external device directly or via a network. In such information processing terminal device, when a CPU shown in Fig. 8 reads an application process, an operating system performs control processing of the second embodiment described below. The information processing terminal of the second embodiment has basically the same structure as that described previously for the first embodiment as shown in Fig. 8, except for the presence of an external storage connector and a card slot.

Further, as with the first embodiment, the processing of the second embodiment is not restricted to program processing performed by the operating system being software, but may be performed by respective units being hardware provided to the information processing terminal as shown in Fig. 9. In Fig. 9, the second embodiment differs from the first embodiment in that the information processing terminal includes as an interface for reading contents from an external device such as an external storage an external device connector 305 such as an external storage connector or a card slot. In this embodiment, the information processing terminal may be provided with either or both of the contents storage 302 and the external device connector 305. Because other units are of the same structure as those of the first embodiment, the description of them will be omitted here.

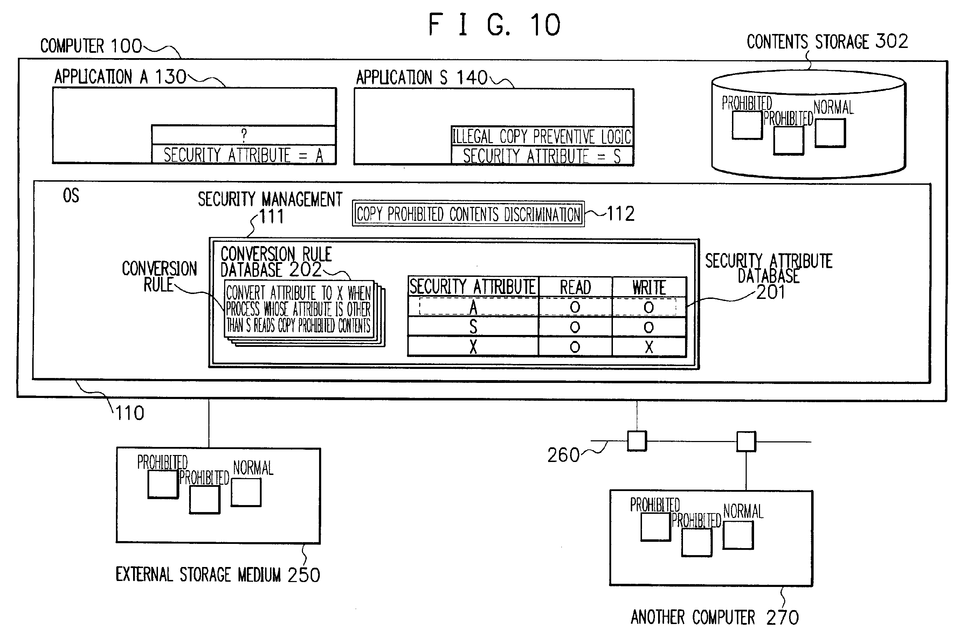

Next, a detailed description will be given of the structure of an information processor according to the second embodiment of the present invention with reference to Fig. 10, a conceptual diagram of this embodiment.

Referring to Fig. 10, a computer 100 or information processor of the second embodiment has the same structure as that described previously for the first embodiment except for the presence of an external storage medium 250 and another computer 270 connected via a network 260. In the structure of the second embodiment, not only contents in the contents storage 302 but also contents in the external storage medium 250 or another computer 270 connected via the network 260 are controlled. Accordingly, even if there are copy prohibited contents in the external storage medium 250 or another computer 270 on the network 260, it is possible to prevent the application process 130 from illegally copying these copy prohibited contents. As a result, according to this embodiment, a network system preventing illegal copy can be provided. Incidentally, the processing operation of the second embodiment is the same as that in the above-mentioned first embodiment.

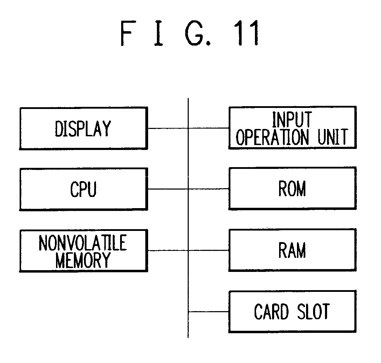

A description will be given of an information processing terminal according to the third embodiment of the present invention. Fig. 11 is a block diagram showing the hardware structure of an information processor. As is the case with the first and the second embodiments, examples of the information processor include, but are not limited to, a commonly used computer, a game console, a multifunction copying machine or the like. Further, the information processing terminal device of this embodiment may be any terminal device capable of installing contents from an external device directly or via a network. In such information processing terminal device, when a CPU shown in Fig. 11 reads an application process, an operating system performs control processing of the third embodiment described below. Incidentally, the information processing terminal device may include an external storage unit (not shown). A card slot shown in Fig. 11 has functions not only for connecting to external devices but also for reading contents from detachable external storage mediums.

Further, as with the aforementioned embodiments, the processing of the third embodiment is not restricted to program processing performed by the operating system being software, but may be performed by respective units being hardware provided to the information processing terminal. The basic structure of hardware is the same as that of the first embodiment shown in Fig. 4, and in the case that an external storage connector is included, the structure is the same as that of the second embodiment shown in Fig. 9. When the information processing terminal is of the same structure as that of the second embodiment, the terminal may be provided with either or both of the contents storage 302 and the external device connector 305. Because other units are of the same structure as those of the first and the second embodiments, the description of them will be omitted here.

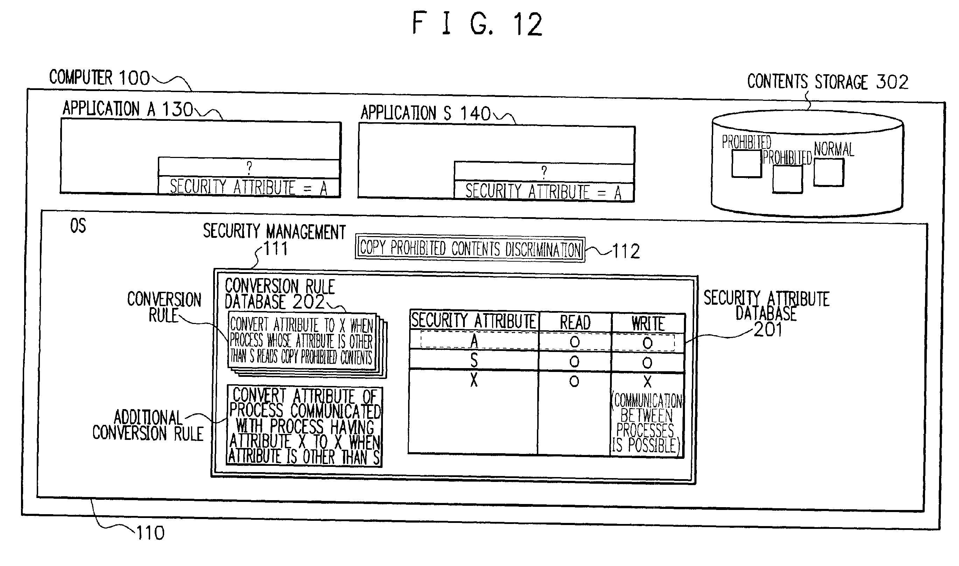

Next, a detailed description will be given of the structure of an information processor according to the third embodiment of the present invention with reference to conceptual diagrams of Figs. 12, 13 and 14. Referring to Figs. 12, 13 and 14, while a computer 100 or an information processor of the third embodiment of the present invention has basically the same structure as that previously described for the first embodiment, in the security management processing, the computer 100 of this embodiment employs a plurality of conversion rules in the conversion rule database 202, and further, the security attribute information in the security attribute database 201 is different.

In the third embodiment of the present invention, as shown in Fig. 12, in the security attribute database 201, the application having the security attribute X can write normal contents by communication between application processes. On the other hand, according to an added conversion rule, when the application having the security attribute X performs writing operation in communication with an application process having the security attribute other than S, the security attribute of the correspondent application process is also converted to X. The added conversion rule (hereinafter referred to as additional conversion rule) is applied as the second rule after the first applied rule (shown above in Fig. 12).

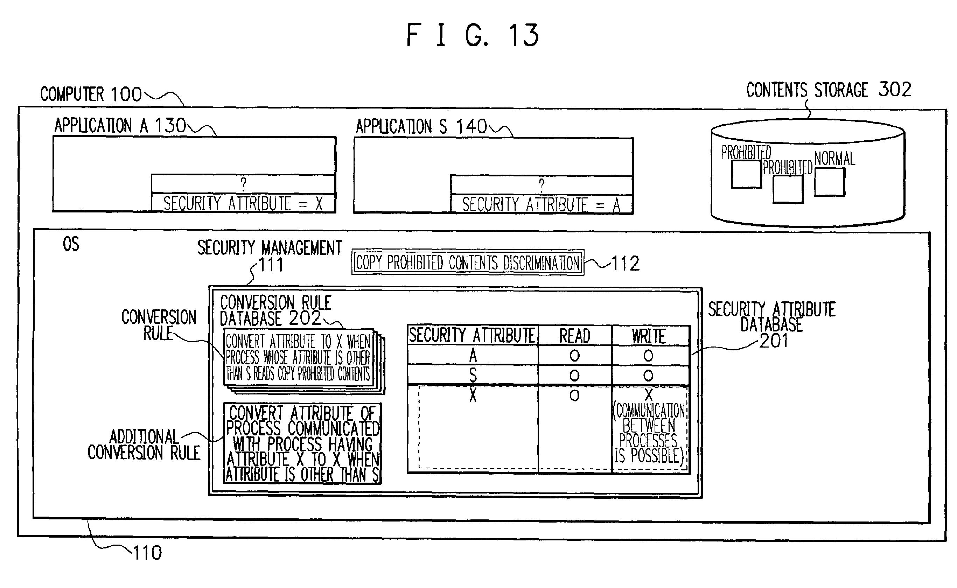

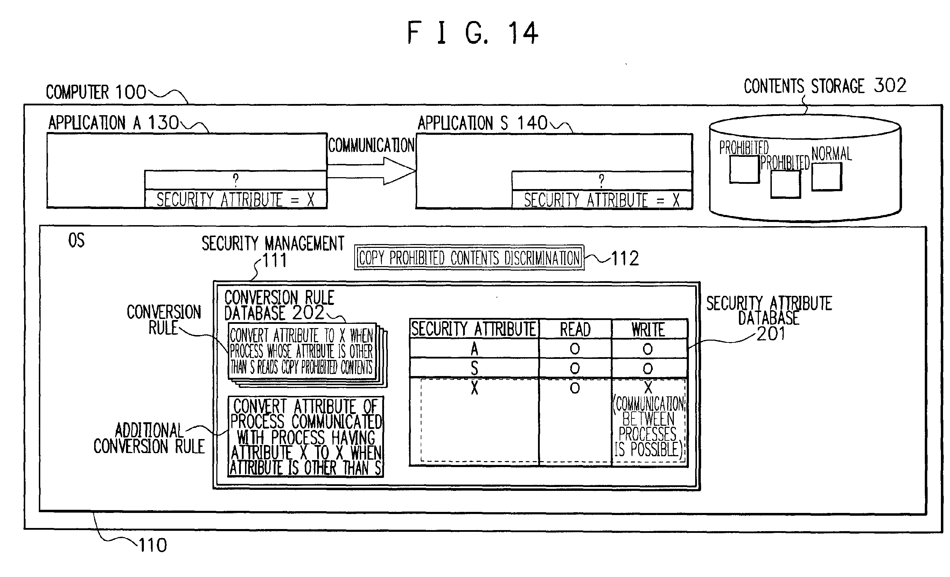

When the application A130 which does not have an illegal copy preventive logic requests for reading of contents in the contents storage 302, the operating system 110 performs the security management processing 111 and the copy prohibited contents discrimination processing 112 to convert the security attribute of the application A130 from A to X (shown in Fig. 13). When the application A130 whose security attribute has been converted to X communicates with the application S140, based on the additional conversion rule "when the application process whose security attribute is X communicates with an application whose security attribute is other than S, the security attribute of the correspondent application is converted to X", the security attribute A of the correspondent application S140 is converted to X (shown in Fig. 14).

Accordingly, even if the application process A130 transmits copy prohibited contents to an application process S140, because both processes A and S are not capable of the writing operation in all storage devices including the contents storage 302, a common memory and network communication, illegal copy of contents is prevented and the restrictions of the application process having the security attribute X are reduced.

A description will be given of an information processing terminal device according to the fourth embodiment of the present invention. The structure of hardware of the information processing terminal is the same as that of the second embodiment described above (shown in Fig. 8). The information processing terminal device of the fourth embodiment may be, for example, a commonly used computer, a game console, multifunction copying machine or the like. Further, the information processing terminal device of this embodiment may be any terminal device capable of installing contents from an external device directly or via a network. In such information processing terminal device, when the CPU shown in Fig. 8 reads the application process, the operating system performs control processing of the fourth embodiment described below.

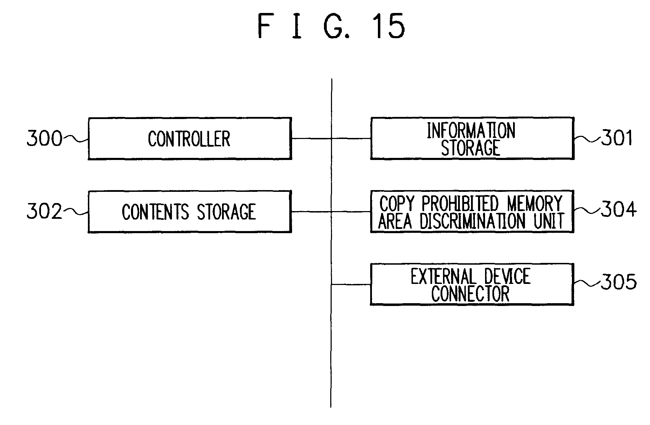

Further, as with the aforementioned embodiments, the processing operation of the fourth embodiment is not restricted to program processing performed by the operating system being software, but may be performed by respective units being hardware provided to the information processing terminal. Referring to Fig. 15, the information processing terminal device of this embodiment has essentially the same structure as those of the previous embodiments except for the presence of a copy prohibited area discrimination unit 304 in stead of the copy prohibited contents discrimination unit. The copy prohibited area discrimination unit 304 determines whether or not contents are present in a copy prohibited area. The external device connector 305, an interface for reading contents from an external device such as an external storage, is optionally provided. Accordingly, in this embodiment, the information processing terminal device may be provided with either or both of the contents storage 302 and the external device connector 305. Because other units are of the same structure as those of the first to third embodiments, the description of them will be omitted here.

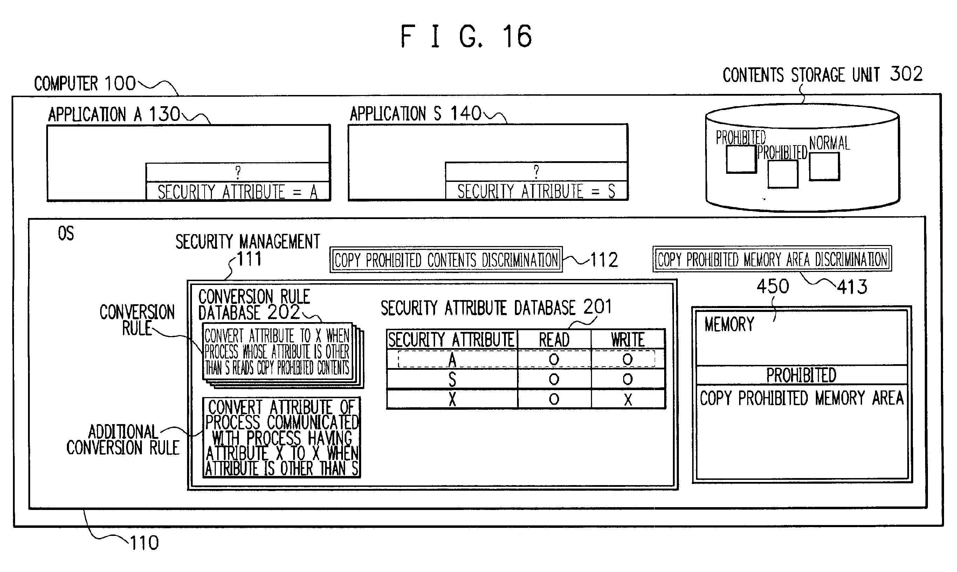

A detailed description will be given of the structure of an information processor according to the fourth embodiment of the present invention referring to a conceptual diagram, Fig. 16.

Referring to Fig. 16, in this embodiment, the OS 110 performs copy prohibited memory area discrimination processing 413 when the computer 100 having the structure of the first embodiment further includes a memory 450.

In the fourth embodiment of the present invention, not only copy prohibited contents in the contents storage 302 but also contents stored in a part of a memory area, for example, a copy prohibited memory area are protected. Accordingly, even if another application process read the copy prohibited contents and the other application process reads the contents deployed on the memory, it is possible to prevent illegal copy. Further, in a built-in computer having a reading function of contents over a network, in the case that the copy prohibited contents are not in a file format but just deployed on a memory, it is also possible to prevent illegal copy. Incidentally, the memory area includes VRAM (Video Random Access Memory), a memory for storing screen information, a sound buffer, a memory for storing voice, or the like.

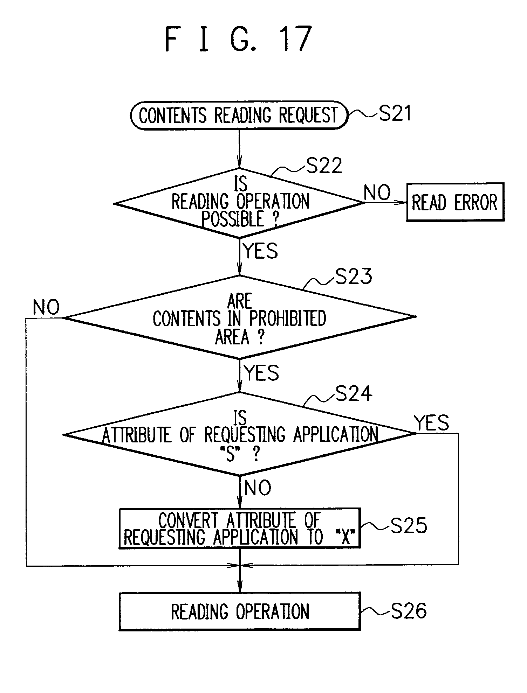

A description will be given of the processing operation according to the fourth embodiment referring to a flowchart, Fig. 17.

The application process A130 not guaranteed to have an illegal copy preventive logic shown in Fig. 16 requests the OS 110 to read contents (step S21 in Fig. 17). The OS 110 performs security management processing 111 just after the reading request from the application process A130. As security management processing 111, the OS 110 checks whether or not the security attribute (here, "A") of the application process having issued the reading request (reading request source) allows reading operation (step S22 in Fig. 17) by referring to the security attribute database 201.

Next, as the security management processing 111, the operating system 110 checks whether or not the security attribute of the application process applies to the conversion rule by referring to the conversion rule for the security attribute of the application process. In this embodiment, the conversion rule is "at the point copy prohibited contents in the memory 450 is read by an application process whose security process is other than S, the security attribute of the application process is converted to X" as shown in Fig. 16.

Furthermore, as the copy prohibited contents discrimination processing 112, the operating system 110 checks whether or not the contents requested for reading are in the copy prohibited memory area (step S23 in Fig. 17). When the contents request for reading are in the copy prohibition area and also the security attribute of the application process having requested for reading of the contents is other than "S" (step S24 in Fig. 17), the security attribute of the application A130 having requested for reading is converted to "X" (step S25 in Fig. 17). After that, the operating system 110 performs the reading operation of the contents requested for reading (step S26 in Fig.9).

A description will be given of an information processing terminal device according to the fifth embodiment of the present invention. The hardware structure of the information processing terminal of this embodiment is the same as those of the second and fourth embodiments (shown in Fig. 8). The information processing terminal device of this embodiment may be, for example, a commonly used computer, a game console, a multifunction copying machine or the like and further, any kind of terminal device capable of installing contents from an external device directly or via a network. In such information processing terminal device, when the CPU shown in Fig. 8 read the application process, the operating system performs control processing of the fifth embodiment described below.

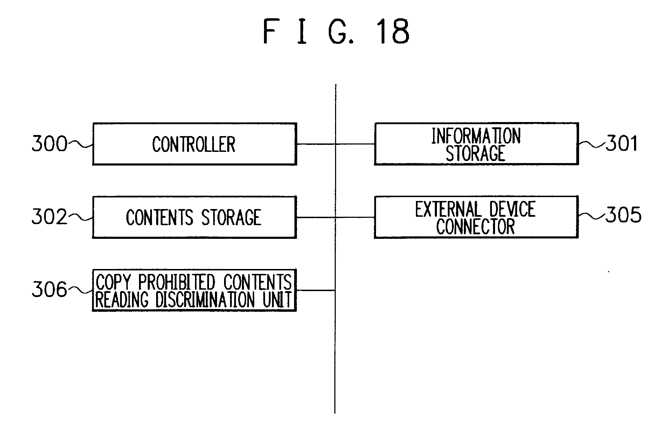

Further, as with the aforementioned embodiments, the processing operation of the fifth embodiment is not restricted to program processing performed by the operating system being software, but may be performed by an information processing terminal provided with respective units being hardware shown in Fig. 18. In Fig. 18, the contents storage 302 is a nonvolatile memory for storing contents. The copy prohibited contents discrimination unit 303 performs copy prohibited contents discrimination processing. The external device connector 305 is an interface for reading contents from an external device such as an external storage. A copy prohibited contents reading discrimination unit 306 determines whether or not an application process has read copy prohibited contents. The information storage 301 memorizes that the application process has read copy prohibited contents. The controller 300 controls each unit to prevent writing operations of the application process having the history of copy prohibited contents read and the application process to which is added data indicating the writing operation prohibition is possible. When the application tries to read copy prohibited contents, the controller 300 adds, based on the conversion rule, data indicating the prohibition of the writing operation to the application process regardless of the security attribute. In this embodiment, the information processing terminal needs either or both of the contents storage 302 and the external device connector 305.

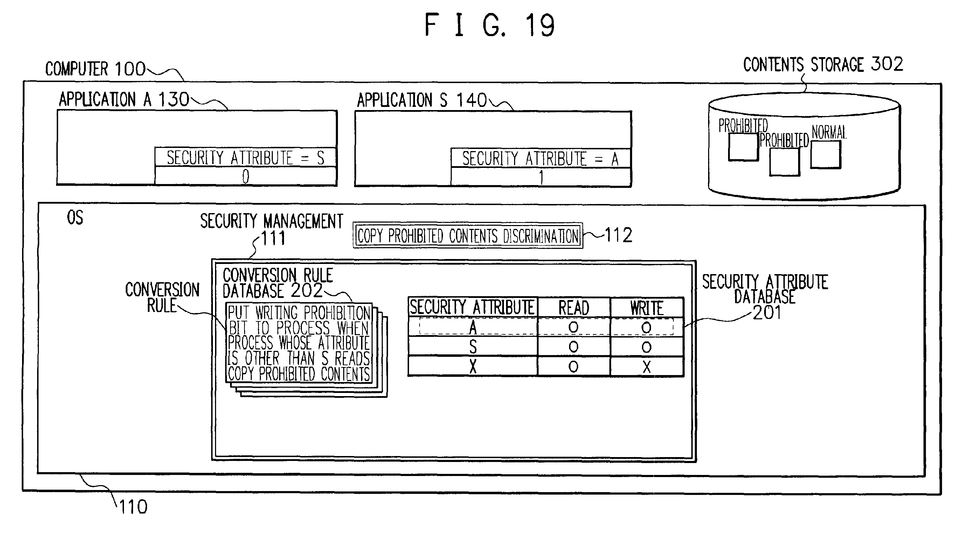

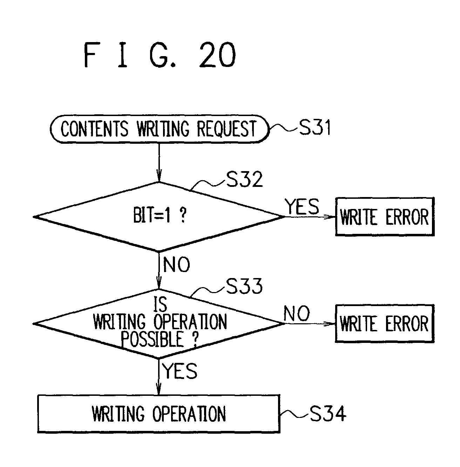

Next, a detailed description will be given of the structure and operation of the information processing terminal of the fifth embodiment of the present invention referring to a concept diagram, Fig. 19 and a flowchart, Fig. 20. As shown in Fig. 19, in the fifth embodiment of the present invention, bit data "0" is assigned for the application A130 and "1" for the application S140. These bit data indicate whether or not the prohibition of the writing operation of the application process is possible and are added to the application process. In this embodiment, "0" indicates writing operation possible and "1" indicates writing operation impossible. The conversion rule of the fifth embodiment is "when an application process whose attribute is other than S reads copy prohibited contents, the bit data 1 which prohibits writing operation is added to the application process". Accordingly, in this embodiment, when the application S140 tries to read copy prohibited contents from the contents storage 302, the bit data 1 which prohibits writing operation is added to the application process S140 based on the conversion rule regardless of the security attribute.

When the application S140 tries to write the copy prohibited contents read from the contents storage 302 (step S31 in Fig. 20), the operating system 110 checks whether or not the bit data 1 is added to the application S140 (step S32 in Fig. 20), and prohibits the writing operation without converting the security attribute in the case that the bit data assigned to the application S140 is 1. When the bit data is other than 1, and is 0 for example, the operating system 110 refers to the security attribute database 201 to check whether or not the writing operation is possible (step S33 in Fig. 20). When the security attribute of the application is other than S, the operating system 110 performs the same processing as previously described for the first embodiment based on the conversion rule to prohibit writing operation. Further, while in this embodiment, the bit data which prohibits the writing operation is used to prohibit the writing operation, it is also possible to prohibit the writing operation of an application process which has the history of copy prohibited contents read by determining whether or not the application process has read copy prohibited contents and memorizes that the application process has read copy prohibited contents.

In the fifth embodiment, as in the first embodiment, the writing operation is not only for the contents stored in the contents storage 302 but also for the contents used in all kind of storage mediums, common memories, network communication and communication between application processes, and further, the transmission of signals is also qualified as a kind of writing operation. Also, as in the fourth embodiment, in a built-in computer or the like having a function for reading via a network, the copy prohibited contents may be simply stored without being in a file format in a memory.

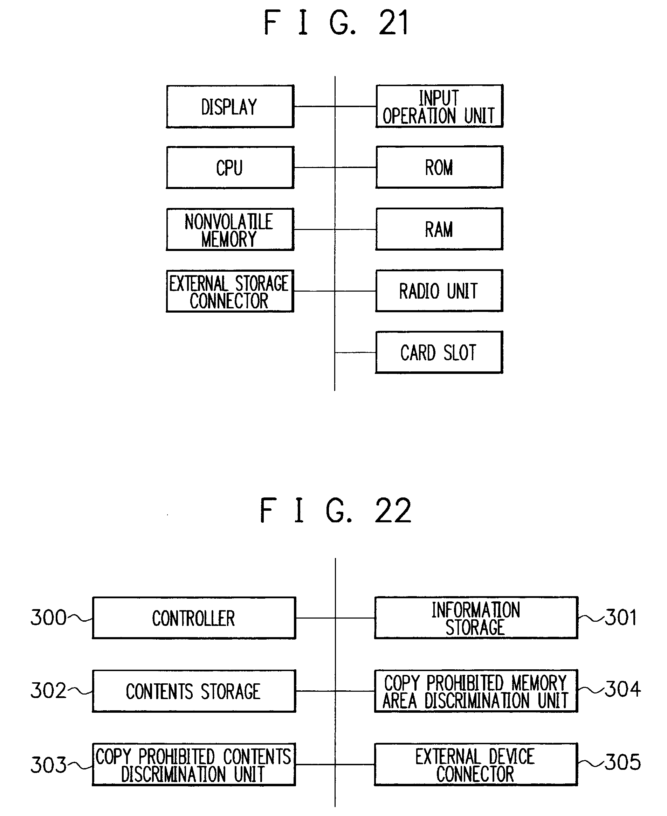

A description will be given of the sixth embodiment of the present invention, a mobile terminal device. Fig. 21 is a diagram showing the hardware structure of the mobile terminal device of the present invention. The mobile terminal device may be a mobile communication terminal having a radio unit, for example, a cell phone, a PDA (Personal Digital Assistant) or the like. Further, the mobile terminal device of this embodiment may be any terminal device having a radio unit capable of installing contents directly or via a network from an external device. In such mobile terminal device, when a CPU shown in Fig. 21 reads an application process, the CPU makes an operating system perform control processing described previously for the first to fifth embodiments.

While the processing in the first to fifth embodiments are program processing performed by the operating system, a software, it may also be performed by the respective units shown in Fig. 22 provided to the mobile terminal. In Fig. 22, the controller 300 performs the security management processing described above. The information storage 301 includes a security attribute database, a conversion rule database and a flag database. The contents storage 302 is a nonvolatile memory storing contents. The copy prohibited contents discrimination unit 303 performs discrimination processing of copy prohibited contents of the embodiments described above. The copy prohibited area discrimination unit 304 determines whether or not contents are present in a copy prohibited area as in the fourth embodiment. The external device connector 305 is an interface for reading contents from external device such as an external storage. Incidentally, in this embodiment, the mobile terminal may be provided with either or both of the contents storage 302 and the external device connector 305. Also, the mobile terminal may be provided with either or both of the copy prohibited contents discrimination unit 303 and a copy prohibited area discrimination unit 304.

Further, to perform the same processing as in the fifth embodiment, in a hardware structure, the mobile terminal may include a reading discrimination unit (not shown) for determining whether or not the application process has read copy prohibited contents and a reading history memory (not shown) for memorizing that copy prohibited contents have been read so that the controller 300 may prohibit the writing operation of the application process which has read copy prohibited contents.

Furthermore, to perform the same processing as in the fifth embodiment, in the hardware structure, the mobile terminal may be provided with a writing prohibition data additional unit for adding bit data which prohibits writing operation based on the conversion rule regardless of the security attribute when an application tries to read copy prohibited contents from the contents storage so that the controller 300 may prohibit the writing operation of the application process with writing prohibition data.

The seventh embodiment can easily achieve the prevention of illegal copy on the whole in a general information processor even if there is an application program not guaranteed to have an illegal copy preventive logic by realizing a recording medium for making a computer execute the programs of the first to fifth embodiments. In other words, it is possible to assure the prevention of illegal copy without assuring that all of application programs have the illegal copy preventive logic.

As set forth hereinabove, according to the present invention, an operation system converts the security attribute of an application process. Thus, illegal copy can be prevented easily even if an application program not guaranteed to have the illegal copy preventive logic is present in a computer (information processor). In other words, the prevention of illegal copy is achieved without certifying that all applications in a computer system have the illegal copy preventive logic.

Further, according to the present invention, only when an application program meets a designated condition (conversion rule), an operation system converts the security attribute of the application program to control the subsequent operation of the application program. Thus, writing operation of an application process not guaranteed to have the illegal copy preventive logic is not limited unless the application process reads copy prohibited contents. Accordingly, even if a computer installs an application program which is not familiar to the computer, the freedom of functions of the application program can be maintained.

Moreover, according to the present invention, the original security attribute of an application process guaranteed to have the illegal copy preventive logic is set to an attribute by which the application process can be recognized as the one guaranteed to have the illegal copy preventive logic to exclude the application process from the subject of writing operation prohibition. Thus an operating system does not limit the operation of an application process guaranteed to have the illegal copy preventive logic.

Additionally, for example, the present invention can be applied in the case that a computer which has to guarantee the prevention of illegal copy installs a program not certified as having an illegal copy preventive logic to execute the program. Further, the present invention can also be applied to a personal computer, a built-in computer of a movable communication terminal such as a cell phone and a PDA, a game console and a multifunction copying machine.

While preferred embodiments of the present invention have been described using specific terms, the description has been for illustrative purposes only, and it is to be understood that changes and variations may be made without departing from the scope of the following claims.

Each feature disclosed in this specification (which term includes the claims) and/or shown in the drawings may be incorporated in the invention independently of other disclosed and/or illustrated features.

The text of the abstract filed herewith is repeated here as part of the specification.

An information processor, an information-processing method, a program and storage medium for assuring the prevention of illegal copying even when an application program without a copy-controlling function exists in a system. An information processor includes: a controller for controlling at least one application to which a designated security attribute is assigned; information storage for storing at least one piece of attribute information indicating a designated attribute, and at least one piece of conversion information for converting the designated security attribute; a contents storage for storing a plurality of contents; and , a copy-prohibited-contents discrimination unit for determining whether contents requested for reading by an application are copy-prohibited contents. The controller converts the designated security attribute based on the conversion information, and controls the operation of an application based on the converted attribute information in a case where the copy-prohibited-contents discrimination unit has determined that the contents in the contents storage requested for reading by the application is copy-prohibited contents.

## Claims

1. An information processor comprising:
a controller for controlling one or more applications;
contents storage means for storing contents, including copy-prohibited contents; and,
associating means for associating an application with reading of copy-prohibited contents;
wherein the controller is adapted to prohibit a writing application by an application that the associating means associates with reading of copy-prohibited contents from the contents storage means.

2. The information processor of claim 1, wherein the associating means comprises:
a reading-discrimination unit for determining whether an application has read copy-prohibited contents of the contents storage means; and,
a reading-history memory for recording that the application has read the copy-prohibited contents;
wherein the controller is adapted to prohibit a writing application by any application that the reading-history memory has recorded as having read the copy-prohibited contents.

3. The information processor of claim 1, wherein the associating means comprises:
a writing-prohibition data addition unit for adding to an application, when that application requests to read copy-prohibited contents of the contents storage means, writing-prohibition data indicating a prohibition of a writing operation by that application.

4. An information processor comprising:
a controller for controlling at least one application to which a designated security attribute is assigned;
information storage means for storing at least one piece of attribute information about a designated attribute and at least one piece of conversion information for converting a designated security attribute; and,
a copy-prohibited-contents discrimination unit for determining whether contents requested by an application for reading are copy-prohibited;
the processor being **characterized in that**, when the copy-prohibited-contents discrimination unit determines that an application is requesting to read copy-prohibited stored contents, the controller is adapted to:
convert the designated security attribute of the requesting application based on the conversion information; and,
control the operation of that application based on information of the converted security attribute.

5. The information processor of claim 4, further comprising:
contents storage means for storing a plurality of contents;
wherein the copy-prohibited stored contents are stored in the contents storage means.

6. The information processor of claim 4, further comprising:
a connector for connecting to an external device via a network;
wherein the copy-prohibited stored contents are stored in the external device.

7. The information processor of claim 4, further comprising:
contents storage means for storing a plurality of contents; and,
a connector for connecting to an external device via a network;
wherein the copy-prohibited stored contents are stored in the contents storage means and/or the external device.

8. The information processor of any of claims 4 to 7, wherein the controller is adapted to convert a security attribute of a correspondent application based on the conversion information in a case where a writing operation is performed in communications between applications having different security attributes.

9. The information processor of any of claims 4 to 7, wherein the reading request by the application is directed to a storage medium, a common memory, a network communication, or communication between applications.

10. The information processor of any of claims 4 to 7, wherein the reading request by the application includes a transmission of signals to another application.

11. An information processing method comprising the steps of:
controlling one or more applications;
storing contents, including copy-prohibited contents; and,
associating an application with reading of copy-prohibited contents;
wherein an application that is associated in the associating step with reading of stored copy-prohibited contents is prohibited from a writing operation.

12. The method of claim 11, wherein the associating step comprises the steps of:
determining whether a reading of copy-prohibited contents takes place; and,
recording the identity of the application that reads the copy-prohibited contents.

13. The method of claim 11, wherein the associating step comprises the steps of:
adding to an application, when that application requests to read copy-prohibited contents, writing-prohibition data indicating a prohibition of a writing operation by that application.

14. An information processing method comprising the steps of:
when an application makes a request to read stored contents, determining whether the contents to be read are copy-prohibited contents;
when the contents requested for reading are determined to be copy-prohibited contents, converting a security attribute based on conversion information for converting the security attribute; and,
controlling operation of the application based on the converted security attribute.

15. The method of claim 14, wherein the contents are in an external device connected via a network, and the application requests to read the contents in the external device .

16. The method of claim 14, wherein, in a case where a writing operation is performed in a communication between applications having different security attributes, a security attribute of a correspondent application is converted based on the conversion information

17. The method of claim 14, wherein the reading request by the application is directed to a storage medium, a common memory, a network communication, or communication between applications.

18. The method of claim 14, wherein the reading request by the application includes a transmission of signals to another application.

19. A program for causing a computer to execute the steps of any of claims 11 to 18.

20. A storage medium storing the program of claim 19.
